(19) Europäisches Patentamt
European Patent Office
Office européen des brevets

(11) **EP 4 564 283 B1**

(12) **EUROPEAN PATENT SPECIFICATION**

(45) Date of publication and mention
of the grant of the patent:
**05.08.2026 Bulletin 2026/32**

(21) Application number: **23213630.9**

(22) Date of filing: **01.12.2023**

(51) International Patent Classification (IPC):
*G06T 3/4038* (2024.01)     *G06T 7/30* (2017.01)

(52) Cooperative Patent Classification (CPC):
**G06T 3/4038; G06T 7/30;** G06T 2207/10024

(54) **SYSTEM AND METHOD FOR 3D SCANNING**

SYSTEM UND VERFAHREN ZUR 3D-ABTASTUNG

SYSTÈME ET PROCÉDÉ DE BALAYAGE 3D

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.06.2025 Bulletin 2025/23**

(73) Proprietor: **Deutsche Telekom AG
53113 Bonn (DE)**

(72) Inventors:
• **YUN, Harrison Hongseo
12203 Berlin (DE)**
• **ARUNOV, Elmar
10587 Berlin (DE)**

(74) Representative: **Vossius & Partner
Patentanwälte Rechtsanwälte mbB
Siebertstrasse 3
81675 München (DE)**

(56) References cited:
**CN-A- 114 972 025     CN-A- 116 664 794
CN-B- 107 093 166**

• YAO WEI ET AL: "Instant Color Matching for Mobile Panorama Imaging", IEEE SIGNAL PROCESSING LETTERS, IEEE, USA, vol. 22, no. 1, 1 January 2015 (2015-01-01), pages 6 - 10, XP011556168, ISSN: 1070-9908, [retrieved on 20140812], DOI: 10.1109/LSP.2014.2345773
• YINGEN XIONG ET AL: "Fast and High-Quality Image Blending on Mobile Phones", CONSUMER COMMUNICATIONS AND NETWORKING CONFERENCE (CCNC), 2010 7TH IEEE, IEEE, PISCATAWAY, NJ, USA, 9 January 2010 (2010-01-09), pages 1 - 5, XP031642903, ISBN: 978-1-4244-5175-3

**Description**

The present invention relates to a system and a method for 3D scanning.

3D scanning is a technique that uses technology for capturing and creating a three-dimensional, 3D, digital model of a physical 3D indoor and/or outdoor space.

Typically, a 3D scanning process, also referred to as scanning pipeline, has two phases: First a data acquisition phase in which 3D information, e.g., depth data, and texture data, e.g., image data, is acquired. Second a post-processing phase in which a 3D model is generated, and the texture data is mapped onto the 3D model. As a result, a 3D content is obtained.

CN 114 972 025 A relates to a rapid image splicing method based on a YUV color space comprising the steps: building a pixel mapping equation according to the planar motion characteristics of a travelling mechanism, building a pixel mapping table through combining the camera position obtained by an encoder and the image depth obtained by a depth camera, and achieving the rapid conversion of image pixels between different visual angles.

The present invention proposes a new method and system for post-processing the texture data and thus for production of a 3D content with an automated color correction based on a luminance distance reduction technique.

3D scanning can be used in various industries such as architecture, engineering, and entertainment to create realistic visualizations and simulations. The 3D space scanning and modeling market is expected to grow significantly in the coming years. A report says that the market size for 3D scanning is expected to reach USD 5.9 billion by 2025, growing at a Compound Annual Growth Rate of 7.8% from 2020 to 2025.

This growth can be attributed to the increasing demand for 3D scanning technology in various industries such as automotive, aerospace, and healthcare, among others. The need for accurate and detailed 3D models for visualization, simulation, and analysis purposes is also driving growth of the market.

The term color inconsistency in photography refers to the situation where the color of a single image is not accurate or consistent with the actual color of the subject being photographed. This can happen due to various factors such as improper white balance, incorrect exposure settings, lighting conditions, and other technical issues.

Color inconsistency can result in images that look unnatural or unappealing, and it can be a significant problem in professional photography where color accuracy is crucial. Proper calibration of equipment and careful attention to lighting conditions and color settings can help to minimize color inconsistency in photography.

Color correction is a process that is traditionally used in various fields such as stage lighting, photography, television, cinematography, and more. It involves the use of color filters to adjust the overall color of the light or image. The goal of color correction is to fix issues with the color of the footage and ensure that the hues and tones match how they appear in real life.

This technical process also aims to unify the colors between different video clips or image frames to create a cohesive final product. There are different software products available for color correction, such as Adobe Premiere Pro, Final Cut Pro, and DaVince Resolve.

For 3D scanning typically a plurality of images is acquired and one or more post-postprocessing steps, which extract a 3D model from the images and/or which map the images onto a 3D model are performed.

Thus, in 3D scanning, color inconsistency or color discrepancy between individual images of the plurality of images may lead to perceptual quality degradation of the 3D content and visual inconsistency. The color inconsistency problem in 3D scanning may look worse than in a traditional photography.

The fundamental reason for color inconsistency in 3D scanning is due to difference in lighting conditions during the acquisition of the plurality of images, which may cause photometric inconsistency. That is, the camera sensor may not capture color information in the same way for each image.

During 3D scanning the camera sensor acquires multiple images with different directions and different angles, which may amplify the color inconsistency.

Additionally, 3D scanning involves capturing of a three-dimensional object, which can introduce additional challenges in terms of lighting and reflection. This may result in color discrepancies between adjacent images, making it difficult to achieve visually consistent colors across multiple images or views.

Color correction techniques can be used to adjust the color and luminance of individual images in the plurality of source images, minimizing the difference between adjacent images.

However, some approaches may be sensitive to photometric inconsistency, which appears as a global intensity or color difference between the images due to the changes of scene illumination and camera responses.

Therefore, in the state of the art it is important to collect accurate color data and use appropriate color correction techniques to ensure visually consistent color in 3D space scanning.

There are various color correction solutions available for 3D scanning. Some photo scanning software such as VueScan, Readiris 17, and SilverFast offer professional color management and batch scanning features.

Furthermore, the OpenCV and Python perform automatic color correction using a color matching and balancing card. Another option is the use professional color correction automation software such as SoftColor Software, which offers layer-based color correction, luminosity, and natural white balance correction.

However, the above require manual optimization process handled by professional designers and color management experts, which will not only make the real-time process impossible, but also increases the cost due to the labor cost. Furthermore, in general, many different tools are required.

Thus, it is an object of the present invention to provide an improved system and method for 3D scanning with an improved color correction. This object is solved by the subject-matter of the independent claims. The dependent claims relate to further aspects of the invention. Any references in the following description to embodiments, objects, aspects and/or examples which are not covered by the appended claims are considered as not being part of the present invention.

According to an aspect of the invention, there is provided a method for 3D scanning with a mobile device, as defined in claim 1.

In an embodiment of the present invention, the luminance distance is determined based on an average of luminance distances from the pixels in the overlapping area.

In an embodiment of the present invention, the first, second, and third plurality of images are structured for storage and processing in a M by N matrix according to the adjacency of the images, such that images with adjacent indices are adjacent images and have a respective overlapping area.

In an embodiment of the present invention, the color space of the second plurality of images is one of YUV, YCbCr, and LAB, preferably the YUV color space.

In an embodiment of the present invention, the first plurality of images comprises a sequence of images in one direction with each image with index i-1 overlapping the next image with index i in the sequence; and wherein the images are structured in a matrix I with one dimension.

In an embodiment of the present invention, the luminance distance, $LD_i$, between $I_{i-1}$ and $I_i$ is calculated based on the difference of the luminance components in each pixels in the overlapping area, OA, $OA_{i-1}$ and $OA_i$ wherein preferably the luminance distance, $LD_i$, between image $_{i-1}$ and image $_i$ is calculated based on the overlapping area, OA, $OA_{i-1}$ and $OA_i$, which has K of horizontal components, x, and L of vertical components, y, in 2 dimensions, respectively:

$$LD_i = \frac{1}{K \times L} \sum_{x=0}^{K-1} \sum_{y=0}^{L-1} ( OA_{i-1}(x,y) - OA_i(x,y) ).$$

In an embodiment of the present invention, the luminance distance $LD_2[i,j]$ between the four adjacent images is calculated based on the overlapping areas, OA, OA[i-1,j-1], OA[i-1,j], OA[i,j-1] and OA[i,j], which has $K_2$ of horizontal components, x, and $L_2$ of vertical components, y, in 2 dimension, respectively:

$$LD_2[i,j] \quad = \quad \frac{1}{K2 \times L2} \quad \sum_{x=0}^{K2-1} \sum_{y=0}^{L2-1} ( \frac{1}{3}((502[i-1,j-1](x,y) - 502[i,j](x,y)) + (502[i-1,j](x,y) - 502[i,j](x,y)) + (502[i,j-1](x,y) - 502[i,j](x,y))$$

According to an aspect of the invention, there is provided a mobile device for 3D scanning, wherein the mobile device is configured to acquire a first plurality of images with a camera of the mobile device, wherein each image overlaps with at least one further image of the first plurality of images; convert the first plurality of images into a second plurality of images in a color space that separates a luminance component from chrominance components; detect an overlapping area in the respective luminance component between two or more adjacent images of adjacent images in the second plurality of images; sequentially correct the luminance component of each adjacent image in the second plurality of images, convert the second plurality of images into a third plurality of images in the same color space as the first plurality of images; and generate a 3D model based on the third plurality of images.

According to an aspect of the invention, there is provided a system for 3D scanning, as defined in claim 5.

In an embodiment of the present invention, the mobile device is configured to perform step A) and the computing entity is configured to perform steps B) to F).

According to an aspect of the invention, there is provided a computer program comprising instructions which, when the program is executed by a mobile device of any one of the above aspects and embodiments and/or a computing entity of any one of the above aspects and embodiments, cause the mobile device and/or computing entity to carry out the method of any one of any one of the above aspects and embodiments.

According to an aspect of the invention, there is provided a computer-readable medium comprising instructions which, when executed by a mobile device of any one of the above aspects and embodiments and/or a computing entity of any one of the above aspects and embodiments, cause the mobile device and/or computing entity to carry out the method of any one of any one of the above aspects and embodiments.

The applicants have realized that every color information in images consists of red, green, and blue color and can be converted to different color spaces that have luminance information and additional chrominance data.

For example, YUV color space consists of luma (Y) and chrominance (UV). In said YUV color space, the brightness values are represented by the Y component, while the color information is represented by the U and V components.

Similarly, YCbCr stands for luma (Y), blue-difference (Cb) and red-difference (Cr) and is also separates the brightness information (Y) from the color information (Cb and Cr). LAB is a color space that is designed to be more perceptually uniform than other color spaces. It stands for lightness (L), a (green-red), and b (blue-yellow).

In the LAB color space, the L component represents the lightness or darkness of a color, while the a and b components represent the color's position on the green-red and blue-yellow axes, respectively. These color spaces are useful for tasks such as color correction, as they allow for more accurate adjustments to be made to an image's color by managing luminance information intensively.

It is a general concept of the present invention, to provide a sequential process for calibration of the color in adjacent images of a plurality of images in a 3D scanning process.

It is a general concept of the present invention, to detect an overlap between adjacent images in a luminance component; to analyze the luminance distance in the overlapped area; and to correct the colors by reducing any luminance distance among adjacent images.

**Brief description of the drawings**

Embodiments of the present invention will now be described by way of example only and with reference to the following accompanying drawings, in which

Fig. 1 shows a flow diagram of a method according to an embodiment of the present invention;
Fig. 2 shows a matrix for storing a plurality of images according to an embodiment of the present invention.
Fig. 3 shows a moving window based color correction according to an embodiment of the present invention.
Fig. 4 shows a color correction for two horizontally adjacent images according to an embodiment of the present invention;
Fig. 5 shows a flow chart of the steps of the color correction for two horizontally adjacent images according to an embodiment of the present invention;
Fig. 6A shows a color correction for four adjacent images according to an embodiment of the present invention;
Fig. 6B shows a flow chart of the steps of the color correction for four adjacent images according to an embodiment of the present invention;
Fig. 7A shows a 3D scan according to an embodiment of the present invention with a single horizontal direction;
Fig. 7B shows the texture images of a 3D scan according to Fig. 7A.
Fig. 8A shows a 3D scan according to an embodiment of the present invention with multiple horizontal directions;
Fig. 8B shows the texture images of a 3D scan according to Fig. 8A.
Fig. 9A shows a 3D scan according to an embodiment of the present invention with multiple vertical directions; and
Fig. 9B shows the texture images of a 3D scan according to Fig. 9A.

**Detailed description**

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like members throughout the description.

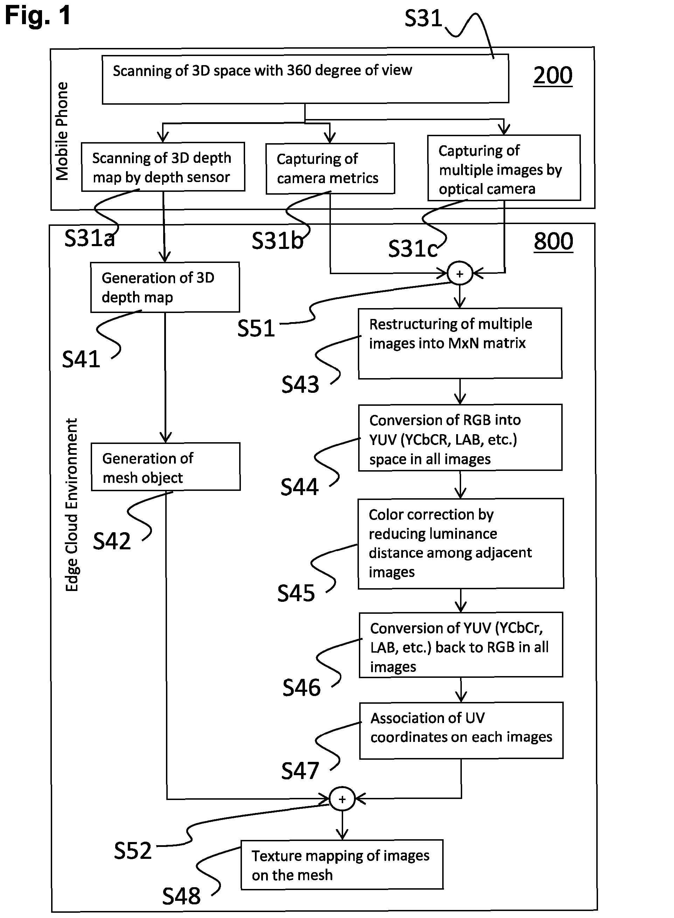

Fig. 1 shows a flow diagram of a method according to an embodiment of the present invention.

In step S31, with a mobile device 200, the data of the 3D scan is acquired. That is, in step S31a, 3D depth data is acquired, preferably with a depth sensor of the mobile device 200.

It is noted that depth sensors in mobile phones may be specialized cameras that capture the depth of an object or a scene. They use various technologies such as time-of-flight (ToF), structured light, IR sensors, LiDAR sensors, or stereo vision to create a 3D map of the environment.

Subsequently or preferably simultaneously to step S31a, in steps S31b and S31c a plurality of images and corresponding camera metric data is acquired. The plurality of images covers the entire field of view of the 3D scan and each image overlaps with at least one adjacent image in the plurality of images.

In an embodiment of the present invention, the acquired data, i.e. depth data and/or image data, is transferred to an network for performing the post-processing steps. Preferably, the acquired data is transferred to an edge could environment for performing the post-processing steps.

Alternatively or additionally, the entire post-processing or parts thereof may be performed on the mobile device 200.

In the post-processing, in steps S41 and S42, the acquired depth sensor data is processed into a 3D depth map, step S41; and the 3D depth map is processed into a mesh object, step S42.

According to an embodiment of the present invention, the acquired camera metric data and the plurality of acquired images is combined, in step S51. Based on the metric data the images are restructured into a matrix for storage of adjacent images.

The restructuring, step S43, is based on at least one of the camera metric data of each image such that in the matrix, preferably a m by n matrix, the adjacent images are stored next to each other, with reference to at least one index, according to their respective position in the field of view of the scan. That is, adjacent images are stored next to each other in the m by n matrix based on their respective adjacency.

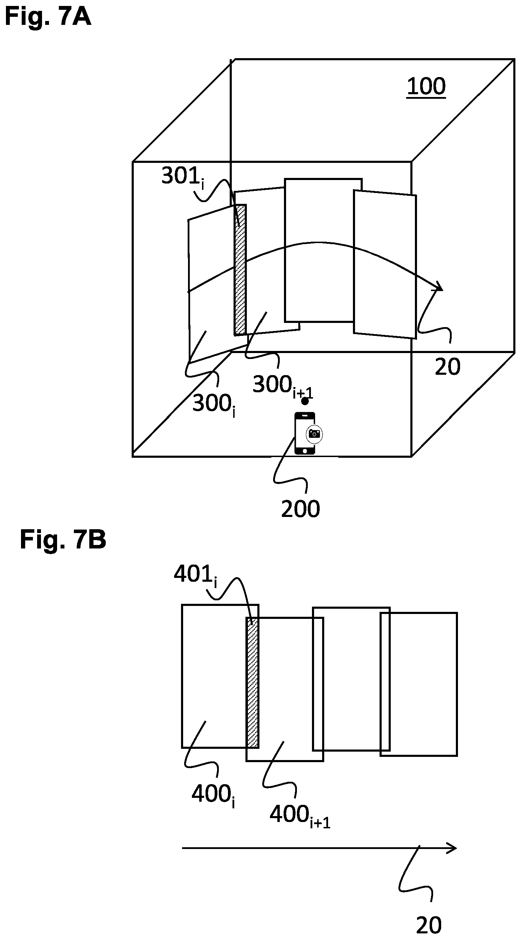

For example, if the plurality of images comprises m images and the metric data indicates that said images were acquired in a first direction with a respective overlap in that first direction, the resulting matrix has only one dimension and a length of M, see Fig. 7A and Fig. 7B, below.

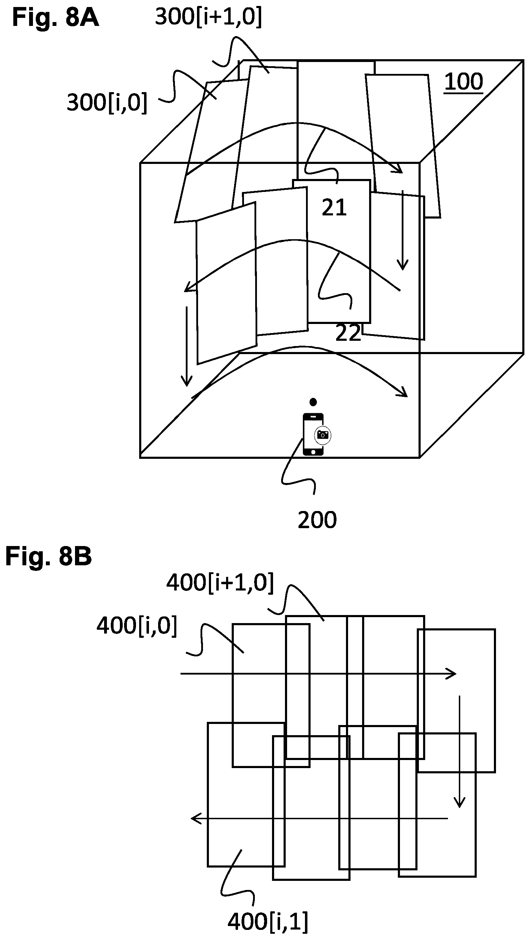

Accordingly, if M images are recorded and the metric data indicates that the first M/2 images were recorded in a first direction and the second M/2 images are recorded in a second direction opposite to the first direction, then the matrix is an M/2 by 2 matrix and the first M/2 images are stored in the first row in the first direction and the second M/2 images are stored in the second row in the second direction, see Fig. 8A and Fig. 8B, below.

According to an embodiment of the present invention, all images in the matrix are converted to a color space that separates a luminance component from the chrominance components, step S44.

As discussed above YUV, YCbCr, and LAB are suitable color spaces for said conversion of step S44.

According to an embodiment of the present invention, every image must have an overlapped area with at least one adjacent image.

For color correction in step S45, in the luminance domain, the overlapped area is detected. The overlapped area is detected by using adjacent two images, three images, or four images, depending on the range of degrees of view in horizontal and vertical ways.

The detection of an overlapped area may be based on one or more of the following technologies: feature matching based, segmentation based, clustering based, and AI network based.

Among them, the feature matching technology is a fundamental technique in computer vision and image processing that involves identifying and matching distinctive features across multiple images. The process of feature matching involves extracting key points of features from each image and then finding corresponding matches between these features. There are several algorithms used for feature matching, for example, brute-force matcher, SIFT (Scale-Invariant Feature Transform) and SURF (Speeded-Up Robust Features).

Additionally or alternatively a combination of AI networks may be used. The segment based detection of overlapped area is suitable. These Ai networks can be trained to detect and differentiate between overlapped areas by assigning different labels to each segment.

According to an embodiment of the present invention, for color correction a luminance distance in the overlapped area is calculated based on the luminance domain of a set of compared images. Then, the luminance component data in the whole set of images is calibrated by using the luminance distance.

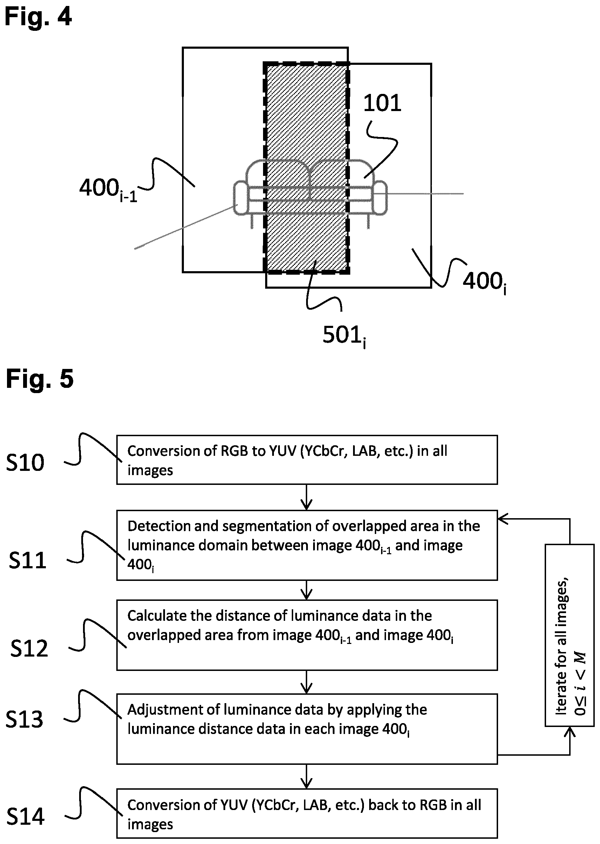

In Fig. 4, the luminance distance between $400_{i-1}$ and $400_i$ is denoted as $LD_i$ and can be analyzed based on the overlapped area, $501_{i-1}$ and $501_i$, which has K of horizontal components, $x$, and L of vertical components, $y$, in 2 dimensions, respectively.

$$LD_i = \frac{1}{K \times L} \sum_{x=0}^{K-1} \sum_{y=0}^{L-1} (501_{i-1}(x,y) - 501_i(x,y))$$

And then, all luminance data in the images $400_i$ and $400_{i-1}$ will be adjusted by the luminance distance, $LD_i$. It implies that the luminance of an image will be enforced to be synchronized with the luminance of the adjacent image taken previously, which gives a practical effect reducing the color discrepancy.

More general, for an image $400_i$ having u and v resolution with maximum value of O and P, respectively, the color correction can be performed as below in python code:

```
for u in range (0,O):
for v in range (0,P):
```

$$400_i(u,v) = 400_i(u,v) + LD\_MA_i$$

And then, it shall be iterated for all images $400_i$, $0 \leq i < M$.

According to an embodiment of the present invention, after color correction, in step S46, all images are converted back into the original color space, preferably into the RGB color space.

In step S47, the texture is calculated from the stored color corrected images by association of UV coordinates to each image. Then, in step S52 the texture and the mesh object are combined and texture mapping of the images onto the mesh object is performed in step S48 to generate a 3D content.

In an embodiment of the present invention, the plurality of images, also referred to as image frames or image set, is acquired to capturing a space environment with up to 360 degrees of view.

It is noted that, when referring to "360 degrees of view" this description refers to a 360 degree of view of the scan of the 3D space. That is, scanning and modelling a 3D space that is completely surrounding the scanning point. This typically includes at least one vertical angle 360 degree scan, i.e., scanning a horizontal line, but may also include several further 360 degree scans with an elevated and/or lowered horizontal view angle.

It is noted that, in this description the term mobile device 200 refers to any type of user equipment configured to perform 3D scanning. That is, the mobile device comprises at least one camera for obtaining a plurality of images during a 3D scan movement, at least one position tracking unit for tracking the position and/or orientation of the device during the 3D scan movement, and computing means for post processing the plurality of images.

In other word, the minimal requirements for the mobile device include a RGB camera and one IR-depth sensor. On the other hand, the optimal requirements include one RGB camera and one high-resolution LiDAR depth sensor.

Optionally, the mobile device further a comprises network communication means for connecting with at least one network, preferably a mobile communication network. In particular, the term encompasses mobile phones, smartphones, and tablet devices.

Optionally one or more of the processing steps described hereinafter are executed by a computing entity connected to the mobile device via the network communication means.

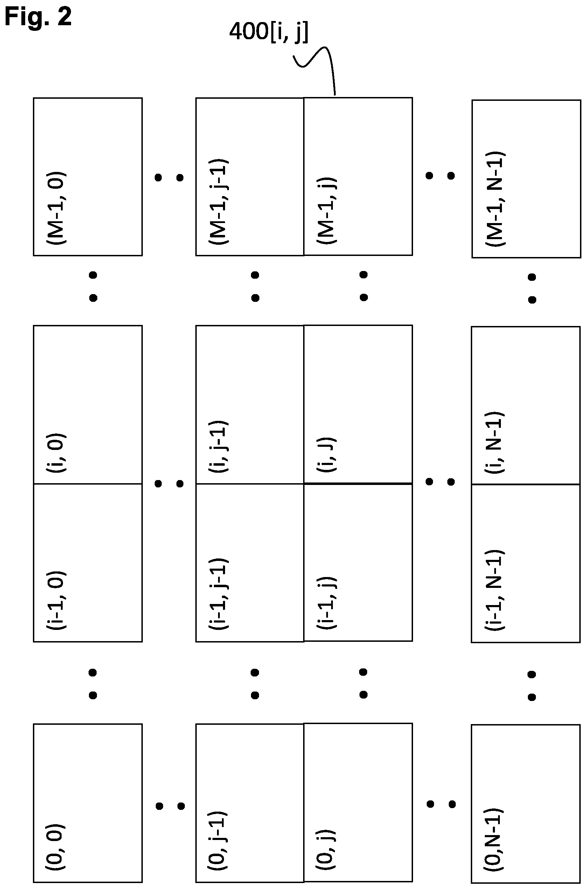

Fig. 2 shows a matrix for storing a plurality of images according to an embodiment of the present invention. As detailed above, the acquired plurality of images is stored in an m by n matrix 400[i,j]. For restructuring the acquired images, the camera metric data for each image is used to determine the position of the respective image in the matrix. The specific camera metric data may include one or more of the camera's position, orientation, and field of view during acquisition of the respective image.

In a preferred embodiment, the images are stored in the matrix in accordance with their respective adjacency in the field of view of the 3D scan. That is, all horizontally neighboring images, i.e., recorded with the same horizontal angle, are preferably stored in one row. Accordingly, for each new horizontal angle the images are stored in a new row.

It is noted that, the terms horizontal and vertical are for improved intelligibility and not limiting the subject matter, they may by exchanged or replaced by first and second.

In other words, in the matrix the images are stored such that images with an overlap have adjacent indices. That is, if an image [i,j] has an overlap with 3 other images, said other images are stored at 3 positions with neighboring indices.

In an embodiment of the present invention, the above described color correction is repeated and applied to the whole set of images stored in the matrix 400[i,j].

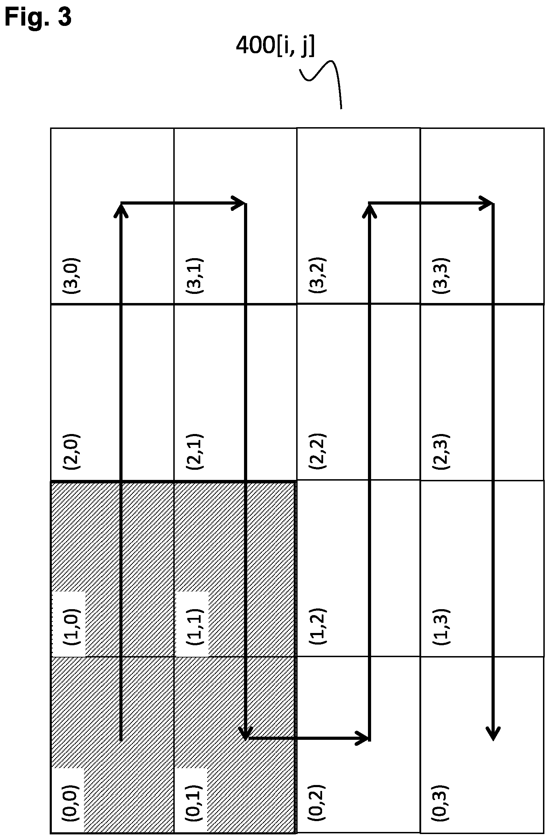

Fig. 3 shows a moving window based color correction according to an embodiment of the present invention. In detail, the color correction is first performed for a first subset of images, preferably two adjacent images or four adjacent images, and then the window is moved and the color correction is performed for a second subject of images, this is repeated until all images have been color corrected.

Preferably, the subsequent subsets are overlapping such that the color correction of the previous subset influences all subsequent color corrections.

In detail, first images 400[0,0],400 [1,0], 400[0,1] and 400[1,1] are color corrected, to 400[0,0]',400 [1,0]', 400 [0,1]' and 400[1,1]', the images 400[1,0]', 400[2,0], 400[1,1]', and 400[2,1] are color corrected.

This color correction is the simplest and fastest way to smooth the luminance discrepancies between adjacent images with minimum calculation workload. Also, it is suitable for panoramic view scanning where all images are adjacent in each other in one horizontal or one vertical direction.

Fig. 4 shows a color correction for two horizontally adjacent images according to an embodiment of the present invention; and Fig. 5 shows a flow chart of the steps of the color correction for two horizontally adjacent images according to an embodiment of the present invention.

In detail, the matrix 400 has only one dimension and the images are indicated by index i. That is, $400_{i-1}$ and $400_i$ are adjacent images with and overlap $501_i$. Thar is the images have been acquired with a at least partially overlapping field of view of the camara and at least partially show the same content, e.g., an object 101.

In step S10 both adjacent images are converted from RGB color space into YUV, or any other suitable color space as discussed above. Then, in step S11 the overlap area $501_i$ is detected and/or segmented (as discussed above), preferably by a comparison of the luminance domain of both images.

In step S12, the luminance distance data between adjacent images is calculated in the overlap area $501_i$.

In step S13, the luminance data of each image is adjusted by applying the distance of luminance data in each of image $400_i$. For the image $400_i$ has u and v resolution with maximum value of O and P, respectively, the color correction can be performed as below in python code:

for u in range (0,O):
for v in range (0,P):

$$400_i(u,v) = 400_i(u,v) + LD\_MA_i$$

And then, it shall be iterated for all images $400_i$, $0 \le i < M$.

In step S14, the images are converted back into the RGB color space.

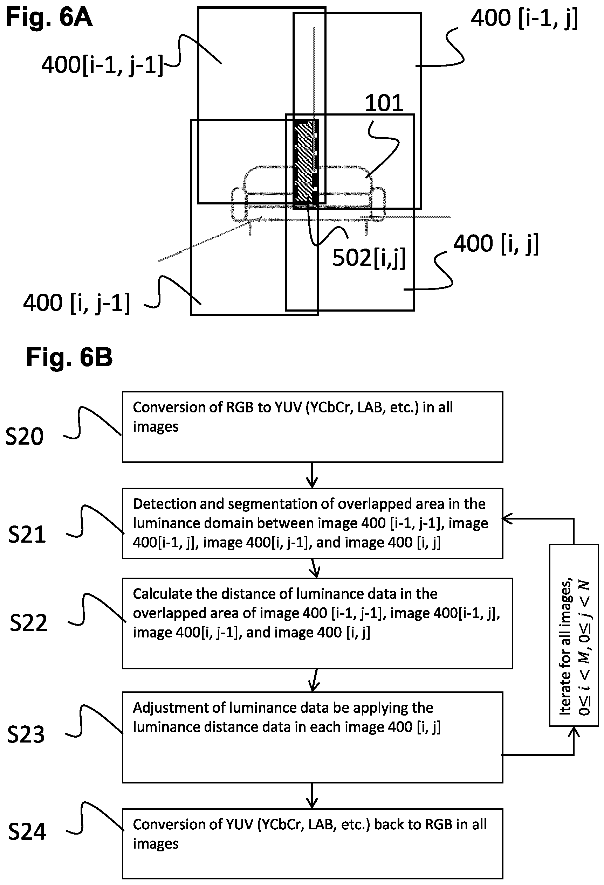

Fig. 6A shows the color correction for four adjacent images according to an embodiment of the present invention and Fig. 6B shows a flow chart of the steps of the color correction for four adjacent images according to an embodiment of the present invention.

In detail, the matrix 400 has two dimensions and four adjacent images are stored at positions 400[i-1,j-1], 400[i-1,j], 400 [i, j-1] and 400[i,j]. That is, all four adjacent images overlap in one are 502. In other word, the adjacent images have been acquired with at least partially the same field of view of the camera and show the same object 101.

In step S20, the images are converted from RGB color space into YUV, or any other suitable color space as discussed above.

In step S21, the overlapped area is detected by analyzing the luminance domain between image 400[i-1, j-1], image 400[i-1, j], image 400[i, j-1], and image 400 [i, j].

In step S22, the luminance distance data in the overlapped area from image 400[i-1, j-1], image 400[i-1, j], image 400[i, j-1], and image 400 [i, j] is calculated.

In step S23, the luminance data is adjusted based on the calculated luminance distance in image 400 [i-1, j-1], image 400[i-1, j], image 400[i, j-1], and image 400 [i, j].

In Fig. 4, the luminance distance among 4 adjacent images, 400[i-1,j-1], 400[i-1,j] 400[i,j-1], and 400[i,j] is denoted as $LD_2[i,j]$ and can be analyzed based on the overlapped area, 502[i-1,j-1], 502[i-1,j], 502[i,j-1] and 502[i,j], which has $K_2$ of horizontal components, x, and $L_2$ of vertical components, y, in 2 dimension, respectively.

$$LD_2[i,j] \quad = \quad \frac{1}{K2 \times L2} \quad \sum_{x=0}^{K2-1}\sum_{y=0}^{L2-1}\left(\frac{1}{3}\left((502[i-1,j-1](x,y) - 502[i,j](x,y)) + \left(502[i-1,j](x,y) - 502[i,j](x,y)\right) + (502[i,j-1](x,y) - 502[i,j](x,y))\right)\right.$$

And then, all luminance data in the images 400[i,j] will be adjusted by the luminance distance, $LD_2[i,j]$. It implies that the luminance of an image will be enforced to be synchronized with the luminance of the adjacent image taken previously, which gives a practical effect reducing the color discrepancy.

For the image 400[i,j] has u and v resolution with maximum value of $O_2$ and $P_2$, respectively, the color correction can be performed as below in python code:

for u in range (0,$O_2$):
for v in range (0,$P_2$):

$$400[i,j](u,v) = 400[i,j](u,v) + LD_2[i,j]$$

And then, it shall be iterated for all images 400[i,j], $0 \le i < M$, and $0 \le j < N$.

In step S24, the images are converted back into the RGB color space.

Fig. 7A shows a 3D scan according to an embodiment of the present invention with a single horizontal direction; and Fig. 7B shows the texture images of a 3D scan according to Fig. 7A.

In detail, a mobile device 200 is used for 3D scanning. The scanning is performed by moving the mobile device 200 with a fixed horizontal angle, i.e., in a line movement 20 with different vertical angles from one end of the field of view of the scan to another end of the field of view of the scan. The movement 20 covers the entire field of view. The field of view of the scan may be up to 360 degrees of view.

During the movement 20 a plurality of images 300i, 300i+1 to 300n is acquired. The images are subsequently acquired. At least two of the subsequently acquired images 300i and 300i+1 preferably have a at least partially overlapping field of view 301i.

According to an embodiment of the present invention, said plurality of images are restructured into a matrix. In case of a single vertical angle, i.e., adjacent images only overlapping in one direction, the dimension of said matrix 400 is one and the images may be indicated by one index i.

In a preferred embodiment the restructuring is based on camera metric data, which is assigned to each of individual image 300i. The specific camera metric data may include one or more of the camera's position, orientation, and field of view during acquisition.

Fig. 8A shows a 3D scan according to an embodiment of the present invention with multiple horizontal directions.. Fig. 8B shows the texture images of a 3D scan according to Fig. 8A.

In detail, a mobile device 200 is used for 3D scanning. In this embodiment, the field of view of the scan is scanned in two movements 21 and 22 with different horizontal angles. As described above, during each horizontal line movements a plurality of images is acquired. Each image of a plurality of images overlaps with a subsequent image in a horizontal direction. At the end of the first movement 21 the vertical angle of the mobile device is changed such that the plurality of images of the second movement 22 additionally overlap vertically with the corresponding images of the plurality of images of the first movement 21.

Fig. 8B shows the images of a 3D scanning according to Fig. 8A. The images 300n have been acquired with respective metric data. The images are stored in a matrix 400 according to their respective position in the field of view of the scan, or in other words, according to their adjacency. Since the images overlap in two directions, the matrix has two dimensions and the stored texture images are indicated by indices i and j.

The restructuring of the images 300n in the matrix 400 is based on the metric data of images 300n. That is, the images of the first movement 21 are arranged in the first row and the images of the second movement 22 are arranged in the second row.

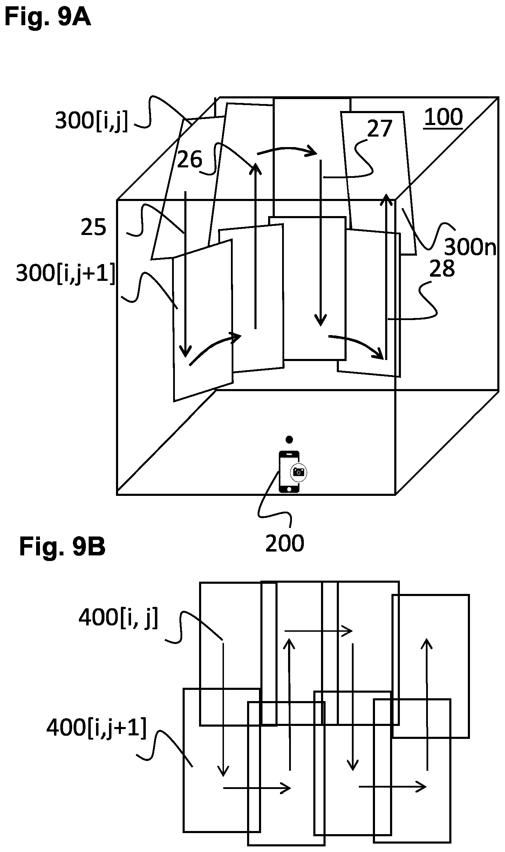

Fig. 9A shows a 3D scan according to an embodiment of the present invention with multiple vertical directions. Fig. 9B shows the texture images of a 3D scan according to Fig. 9A.

In detail a mobile device 200 is used for 3D scanning. The mobile device 200 is moved in a zig-zag like movement up and down and from left to right. As described above, during the movement a plurality of images 300n is acquired. Each image of the plurality of images overlaps with a subsequent image in a horizontal direction and a vertical direction.

Fig. 9B shows the images of a 3D scanning according to Fig. 9A. The images 300n have been acquired with respective metric data. The images are stored in a matrix 400 according to their respective position in the field of view of the scan, or in other words, according to their adjacency. Since the images overlap in two directions, the matrix has two dimensions and the stored texture images are indicated by indices i and j.

That is, the images of the first movement 25 are arranged in the first column, the images of the second movement 26 are arranged in the second column, the images of the third movement 27 are arranged in the third column, and the images of the fourth movement 28 are arranged in the fourth column.

In other words, for 3D scanning according to the present invention, a mobile device 200 is moved in at least one horizontal and/or vertical movement over the field of view of the scan. During the movement a plurality of images are acquired together with metric data for each image. Subsequent images partially overlap in at least one direction, preferably in two directions. That is, at least two images are adjacent preferably four images are adjacent.

The images are then restructured in texture image matrix based on metric data of the images according to their respective adjacency.

Various modifications to the embodiments described are possible and will occur to those skilled in the art without departing from the invention which is defined by the following claims.

**Claims**

1.   A method for 3D scanning with a mobile device, comprising:

acquiring a first plurality of images with a camera of the mobile device, wherein each image overlaps with at least one further image of the first plurality of images;
converting of the first plurality of images into a second plurality of images in a color space that separates a luminance component from chrominance components;
detecting of an overlapping area in the respective luminance component between two or more adjacent images of adjacent images in the second plurality of images;
determining a luminance distance between the adjacent images in the overlapping area;
sequentially correcting the luminance component of each adjacent image in the second plurality of images by the luminance distance,
converting of the second plurality of images into a third plurality of images in the same color space as the first plurality of images; and
generating a 3D model based on the third plurality of images.

wherein the first plurality of images comprises a sequence of images in two directions, with four adjacent images overlapping each other, the adjacent images being structured in a matrix I with 2 dimensions at positions I[i-1,j-1], I[i-1,j] I[i,j-1], and I[i,j]; and
wherein the luminance distance $LD_2[i,j]$ between the four adjacent images is calculated based on the difference of the luminance components in each pixels in the overlapping areas, OA.

2. Method according to claim 1, wherein the first, second, and third plurality of images are structured for storage and processing in a M by N matrix according to the adjacency of the images, such that images with adjacent indices are adjacent images and have a respective overlapping area.

3. Method according to claim 1 or claim 2, wherein the color space of the second plurality of images is one of YUV, YCbCr, and LAB, preferably the YUV color space.

4. Method according to claim 1,
wherein the luminance distance $LD_2[i,j]$ between the four adjacent images is calculated based on the overlapping areas, OA, OA[i-1,j-1], OA[i-1,j], OA[i,j-1] and OA[i,j], which has $K_2$ of horizontal components, $x$, and $L_2$ of vertical components, y, in 2 dimension, respectively:

$$LD_2[i,j] \quad = \quad \frac{1}{K2 \times L2} \quad \sum_{x=0}^{K2-1} \sum_{y=0}^{L2-1} \left( \frac{1}{3} \left( (OA[i-1,j-1](x,y) - OA[i,j](x,y)) + \left( OA[i-1,j](x,y) - OA[i,j](x,y) \right) + (OA[i,j-1](x,y) - OA[i,j](x,y)) \right)$$

5. A mobile device for 3D scanning,

   wherein the mobile device is configured to
   acquire a first plurality of images with a camera of the mobile device, wherein each image overlaps with at least one further image of the first plurality of images.
   convert the first plurality of images into a second plurality of images in a color space that separates a luminance component from chrominance components;
   detect an overlapping area in the respective luminance component between two or more adjacent images of adjacent images in the second plurality of images;
   determine a luminance distance between the adjacent images in the overlapping area;
   sequentially correct the luminance component of each adjacent image in the second plurality of images by the luminance distance,
   convert the second plurality of images into a third plurality of images in the same color space as the first plurality of images; and
   generate a 3D model based on the third plurality of images.

   wherein the first plurality of images comprises a sequence of images in two directions, with four adjacent images overlapping each other, the adjacent images being structured in a matrix I with 2 dimensions at positions I[i-1,j-1], I[i-1,j] I[i,j-1], and I[i,j]; and
   wherein the luminance distance $LD_2[i,j]$ between the four adjacent images is calculated based on the difference of the luminance components in each pixels in the overlapping areas, OA.

6. A system for 3D scanning,

   wherein the system comprises a mobile device comprising network communication means for connecting with a network; and the system further comprises a computing entity is provided in said network;
   wherein the system is configured to

   A) acquire a first plurality of images with a camera of the mobile device, wherein each image overlaps with at least one further image of the first plurality of images.
   B) convert the first plurality of images into a second plurality of images in a color space that separates a luminance component from chrominance components;
   C) detect an overlapping area in the respective luminance component between two or more adjacent images of adjacent images in the second plurality of images and determine a luminance distance between the adjacent images in the overlapping area;
   D) sequentially correct the luminance component of each adjacent image in the second plurality of images by the luminance distance,
   E convert the second plurality of images into a third plurality of images in the same color space as the first plurality of images; and

F) generate a 3D model based on the third plurality of images;

wherein the mobile device and computing entity are configured to communicate data via the network;
wherein the mobile device is configured to perform at least step A) and the computing entity is configured to perform any remaining steps of the steps of B) to F);

wherein the first plurality of images comprises a sequence of images in two directions, with four adjacent images overlapping each other, the adjacent images being structured in a matrix I with 2 dimensions at positions I[i-1,j-1], I[i-1,j] I[i,j-1], and I[i,j]; and
wherein the luminance distance $LD_2[i,j]$ between the four adjacent images is calculated based on the difference of the luminance components in each pixels in the overlapping areas, OA.

7. System of claim 6, wherein the mobile device is configured to perform step A) and the computing entity is configured to perform steps B) to F).

8. A computer program comprising instructions which, when the program is executed by a mobile device of claim 5 or 6 and/or a computing entity of claim 6, cause the mobile device and/or computing entity to carry out the method of any one of claims 1 to 4.

9. A computer-readable medium comprising instructions which, when executed by a mobile device of claim 5 or 6 and/or a computing entity of claim 6, cause the mobile device and/or computing entity to carry out the method of any one of claims 1 to 4.

**Patentansprüche**

1. Verfahren zum 3D-Abtasten mit einer mobilen Vorrichtung, aufweisend:

Erfassen mehrerer erster Bilder mit einer Kamera der mobilen Vorrichtung, wobei jedes Bild mit mindestens einem weiteren Bild der mehreren ersten Bilder überlappt;
Umwandeln der mehreren ersten Bilder in mehrere zweite Bilder in einem Farbraum, der eine Luminanzkomponente von Chrominanzkomponenten trennt;
Erkennen eines Überlappungsbereichs in der jeweiligen Luminanzkomponente zwischen zwei oder mehr benachbarten Bildern von benachbarten Bildern in den mehreren zweiten Bildern;
Bestimmen eines Luminanzdistanz zwischen den benachbarten Bildern in dem Überlappungsbereich;
sequenzielles Korrigieren der Luminanzkomponente jedes benachbarten Bildes in den mehreren zweiten Bildern um die Luminanzdistanz,
Umwandeln der mehreren zweiten Bilder in mehrere dritte Bilder in demselben Farbraum wie die mehreren ersten Bilder; und
Erzeugen eines 3D-Modells basierend auf den mehreren dritten Bildern,
wobei die mehreren ersten Bilder eine Sequenz von Bildern in zwei Richtungen aufweisen, wobei vier benachbarte Bilder einander überlappen, wobei die benachbarten Bilder in einer Matrix I mit 2 Dimensionen an Positionen I[i-1,j-1], I[i-1,j], I[i,j-1] und I[i,j] strukturiert sind; und
wobei die Luminanzdistanz $LD_2[i,j]$ zwischen den vier benachbarten Bildern basierend auf der Differenz der Luminanzkomponenten in jedem Pixel in den Überlappungsbereichen, OA, berechnet wird.

2. Verfahren nach Anspruch 1, wobei die mehreren ersten, zweiten und dritten Bilder zur Speicherung und Verarbeitung in einer M-mal-N-Matrix gemäß der Nachbarschaft der Bilder strukturiert sind, derart, dass Bilder mit benachbarten Indizes benachbarte Bilder sind und einen jeweiligen Überlappungsbereich aufweisen.

3. Verfahren nach Anspruch 1 oder 2, wobei der Farbraum der mehreren zweiten Bilder einer von YUV, YCbCr und LAB, vorzugsweise der YUV-Farbraum ist.

4. Verfahren nach Anspruch 1,
wobei die Luminanzdistanz $LD_2[i,j]$ zwischen den vier benachbarten Bildern basierend auf den überlappenden Bereichen, OA, OA[i-1,j-1], OA[i-1,j], OA[i,j-1] und OA[i,j], berechnet wird, welche jeweils $K_2$ an horizontalen Komponenten, x und $L_2$ an vertikalen Komponenten, y in 2 Dimensionen aufweist:

$$LD_2[i,j] \quad = \quad \frac{1}{K2 \times L2} \quad \sum_{x=0}^{K2-1} \sum_{y=0}^{L2-1} \left( \frac{1}{3} \left( (OA[i-1,j-1](x,y) - OA[i,j](x,y)) + \left( OA[i-1,j](x,y) - OA[i,j](x,y) \right) + (OA[i,j-1](x,y) - OA[i,j](x,y) \right) \right.$$

5. Mobile Vorrichtung zum 3D-Abtasten,
   wobei die mobile Vorrichtung konfiguriert ist zum:

   Erfassen mehrere erster Bilder mit einer Kamera der mobilen Vorrichtung, wobei jedes Bild mit mindestens einem weiteren Bild der mehreren erste Bilder überlappt;
   Umwandeln der mehreren ersten Bilder in mehrere zweite Bilder in einem Farbraum, der eine Luminanzkomponente von Chrominanzkomponenten trennt;
   Erkennen eines Überlappungsbereichs in der jeweiligen Luminanzkomponente zwischen zwei oder mehr benachbarten Bildern von benachbarten Bildern in den mehreren zweiten Bildern;
   Bestimmen einer Luminanzdistanz zwischen den benachbarten Bildern in dem Überlappungsbereich;
   sequenzielles Korrigieren der Luminanzkomponente jedes benachbarten Bildes in den mehreren zweiten Bildern um die Luminanzdistanz,
   Umwandeln der mehreren zweiten Bilder in mehrere dritte Bilder in demselben Farbraum wie die mehreren ersten Bilder; und
   Erzeugen eines 3D-Modells basierend auf den mehreren dritten Bildern,
   wobei die mehreren ersten Bilder eine Sequenz von Bildern in zwei Richtungen aufweisen, wobei vier benachbarte Bilder einander überlappen, wobei die benachbarten Bilder in einer Matrix I mit 2 Dimensionen an Positionen I[i-1,j-1], I[i-1,j], I[i,j-1] und I[i,j] strukturiert sind; und
   wobei die Luminanzdistanz $LD_2[i,j]$ zwischen den vier benachbarten Bildern basierend auf der Differenz der Luminanzkomponenten in jedem Pixel in den Überlappungsbereichen, OA, berechnet wird.

6. System zum 3D-Abtasten,

   wobei das System eine mobile Vorrichtung aufweist, aufweisend Netzwerkkommunikationsmittel zum Verbinden mit einem Netzwerk; und das System ferner eine Recheneinheit aufweist, die in dem Netzwerk bereitgestellt ist;
   wobei das System konfiguriert ist zum

   A) Erfassen mehrerer erster Bilder mit einer Kamera der mobilen Vorrichtung, wobei jedes Bild mit mindestens einem weiteren Bild der mehreren ersten Bilder überlappt;
   B) Umwandeln der mehreren ersten Bilder in mehrere zweite Bilder in einem Farbraum, der eine Luminanzkomponente von Chrominanzkomponenten trennt;
   C) Erkennen eines Überlappungsbereichs in der jeweiligen Luminanzkomponente zwischen zwei oder mehr benachbarten Bildern von benachbarten Bildern in den mehreren zweiten Bildern und Bestimmen einer Luminanzdistanz zwischen den benachbarten Bildern in dem Überlappungsbereich;
   D) sequenzielles Korrigieren der Luminanzkomponente jedes benachbarten Bildes in den mehreren zweiten Bildern um die Luminanzdistanz,
   E) Umwandeln der mehreren zweiten Bilder in mehrere dritte Bilder in demselben Farbraum wie die mehreren ersten Bilder; und
   F) Erzeugen eines 3D-Modells basierend auf den mehreren dritten Bildern;

   wobei die mobile Vorrichtung und die Recheneinheit konfiguriert sind, um Daten über das Netzwerk zu kommunizieren;
   wobei die mobile Vorrichtung konfiguriert ist, um mindestens Schritt A) durchzuführen, und die Recheneinheit konfiguriert ist, jegliche verbleibenden Schritte der Schritte von B) bis F) durchzuführen;
   wobei die mehreren ersten Bilder eine Sequenz von Bildern in zwei Richtungen aufweisen, wobei vier benachbarte Bilder einander überlappen, wobei die benachbarten Bilder in einer Matrix I mit 2 Dimensionen an Positionen I[i-1,j-1], I[i-1,j], I[i,j-1] und I[i,j] strukturiert sind; und
   wobei die Luminanzdistanz $LD_2[i,j]$ zwischen den vier benachbarten Bildern basierend auf der Differenz der Luminanzkomponenten in jedem Pixel in den Überlappungsbereichen, OA, berechnet wird.

7. System nach Anspruch 6, wobei die mobile Vorrichtung konfiguriert ist, um Schritt A) durchzuführen, und die Recheneinheit konfiguriert ist, um die Schritte B) bis F) durchzuführen.

8.	Computerprogramm, aufweisend Anweisungen, die, wenn das Programm durch eine mobile Vorrichtung nach Anspruch 5 oder 6 und/oder eine Recheneinheit nach Anspruch 6 ausgeführt wird, die mobile Vorrichtung und/oder die Recheneinheit veranlassen, das Verfahren nach einem der Ansprüche 1 bis 4 vorzunehmen.

9.	Computerlesbares Medium, aufweisend Anweisungen, die, wenn sie durch eine mobile Vorrichtung nach Anspruch 5 oder 6 und/oder eine Recheneinheit nach Anspruch 6 ausgeführt werden, die mobile Vorrichtung und/oder Recheneinheit veranlassen, das Verfahren nach einem der Ansprüche 1 bis 4 vorzunehmen.

**Revendications**

1.	Procédé de balayage 3D avec un dispositif mobile, comprenant :

l'acquisition d'une première pluralité d'images avec une caméra du dispositif mobile, dans lequel chaque image chevauche au moins une image supplémentaire de la première pluralité d'images ;
la conversion de la première pluralité d'images en une deuxième pluralité d'images dans un espace colorimétrique qui sépare une composante de luminance des composantes de chrominance ;
la détection d'une zone de chevauchement dans la composante de luminance respective entre deux images adjacentes ou plus d'images adjacentes dans la deuxième pluralité d'images ;
la détermination d'une distance de luminance entre les images adjacentes dans la zone de chevauchement ;
la correction séquentielle de la composante de luminance de chaque image adjacente dans la deuxième pluralité d'images par la distance de luminance,
la conversion de la deuxième pluralité d'images en une troisième pluralité d'images dans le même espace colorimétrique que la première pluralité d'images ; et
la génération d'un modèle 3D sur la base de la troisième pluralité d'images.
dans lequel la première pluralité d'images comprend une séquence d'images dans deux directions, avec quatre images adjacentes se chevauchant, les images adjacentes étant structurées dans une matrice I avec 2 dimensions au niveau des positions I[i-1,j-1], I[i-1,j] I[i,j-1] et I[i,j] ; et
dans lequel la distance de luminance $LD_2[i,j]$ entre les quatre images adjacentes est calculée sur la base de la différence des composantes de luminance dans chaque pixel dans les zones de chevauchement, OA.

2.	Procédé selon la revendication 1, dans lequel les première, deuxième et troisième pluralités d'images sont structurées pour stockage et traitement dans une matrice M par N selon la contiguïté des images, de telle sorte que des images avec des indices adjacents sont des images adjacentes et ont une zone de chevauchement respective.

3.	Procédé selon la revendication 1 ou la revendication 2, dans lequel l'espace colorimétrique de la deuxième pluralité d'images est l'un parmi YUV, YCbCr et LAB, de préférence l'espace colorimétrique YUV.

4.	Procédé selon la revendication 1,
dans lequel la distance de luminance $LD_2[i,j]$ entre les quatre images adjacentes est calculée sur la base des zones de chevauchement, OA, OA[i-1,j-1], OA[i-1,j], OA[i,j-1] et OA[i,j], qui a $K_2$ de composantes horizontales, x, et $L_2$ de composantes verticales, y, en 2 dimensions, respectivement :

$$LD_2[i,j] \quad = \quad \frac{1}{K2 \times L2} \quad \sum_{x=0}^{K2-1}\sum_{y=0}^{L2-1}(\frac{1}{3}((OA[i-1,j-1](x,y) - OA[i,j](x,y)) + \big(OA[i-1,j](x,y) - OA[i,j](x,y)\big) + \big(OA[i,j-1](x,y) - OA[i,j](x,y)\big)$$

5.	Dispositif mobile de balayage 3D,
dans lequel le dispositif mobile est configuré pour :

acquérir une première pluralité d'images avec une caméra du dispositif mobile, dans lequel chaque image chevauche au moins une image supplémentaire de la première pluralité d'images.
convertir la première pluralité d'images en une deuxième pluralité d'images dans un espace colorimétrique qui sépare une composante de luminance des composantes de chrominance ;
détecter une zone de chevauchement dans la composante de luminance respective entre deux images adjacentes ou plus d'images adjacentes dans la deuxième pluralité d'images ;

déterminer une distance de luminance entre les images adjacentes dans la zone de chevauchement ;

corriger séquentiellement la composante de luminance de chaque image adjacente dans la deuxième pluralité d'images par la distance de luminance,

convertir la deuxième pluralité d'images en une troisième pluralité d'images dans le même espace colorimétrique que la première pluralité d'images ; et

générer un modèle 3D sur la base de la troisième pluralité d'images.

dans lequel la première pluralité d'images comprend une séquence d'images dans deux directions, avec quatre images adjacentes se chevauchant, les images adjacentes étant structurées dans une matrice I avec 2 dimensions au niveau des positions I[i-1,j-1], I[i-1,j] I[i,j-1] et I[i,j] ; et

dans lequel la distance de luminance $LD_2[i,j]$ entre les quatre images adjacentes est calculée sur la base de la différence des composantes de luminance dans chaque pixel dans les zones de chevauchement, OA.

6. Système de balayage 3D,

dans lequel le système comprend un dispositif mobile comprenant un moyen de communication de réseau permettant de se connecter à un réseau ; et le système comprend en outre une entité informatique qui est prévue dans ledit réseau ;

dans lequel le système est configuré pour

A) acquérir une première pluralité d'images avec une caméra du dispositif mobile, dans lequel chaque image chevauche au moins une image supplémentaire de la première pluralité d'images ;

B) convertir la première pluralité d'images en une deuxième pluralité d'images dans un espace colorimétrique qui sépare une composante de luminance des composantes de chrominance ;

C) détecter une zone de chevauchement dans la composante de luminance respective entre deux images adjacentes ou plus d'images adjacentes dans la deuxième pluralité d'images et déterminer une distance de luminance entre les images adjacentes dans la zone de chevauchement ;

D) corriger séquentiellement la composante de luminance de chaque image adjacente dans la deuxième pluralité d'images par la distance de luminance,

E convertir la deuxième pluralité d'images en une troisième pluralité d'images dans le même espace colorimétrique que la première pluralité d'images ; et

F) générer un modèle 3D sur la base de la troisième pluralité d'images ;

dans lequel le dispositif mobile et l'entité informatique sont configurés pour communiquer des données par l'intermédiaire du réseau ;

dans lequel le dispositif mobile est configuré pour réaliser au moins l'étape A) et l'entité informatique est configurée pour réaliser l'une quelconque des étapes restantes des étapes B) à F) ;

dans lequel la première pluralité d'images comprend une séquence d'images dans deux directions, avec quatre images adjacentes se chevauchant, les images adjacentes étant structurées dans une matrice I avec 2 dimensions au niveau des positions I[i-1,j-1], I[i-1,j] I[i,j-1] et I[i,j] ; et

dans lequel la distance de luminance $LD_2[i,j]$ entre les quatre images adjacentes est calculée sur la base de la différence des composantes de luminance dans chaque pixel dans les zones de chevauchement, OA.

7. Système selon la revendication 6, dans lequel le dispositif mobile est configuré pour réaliser l'étape A) et l'entité informatique est configurée pour réaliser les étapes B) à F).

8. Programme informatique comprenant des instructions qui, lorsque le programme est exécuté par un dispositif mobile selon la revendication 5 ou 6 et/ou une entité informatique selon la revendication 6, amènent le dispositif mobile et/ou l'entité informatique à mettre en oeuvre le procédé selon l'une quelconque des revendications 1 à 4.

9. Support lisible par ordinateur comprenant des instructions qui, lorsqu'elles sont exécutées par un dispositif mobile selon la revendication 5 ou 6 et/ou une entité informatique selon la revendication 6, amènent le dispositif mobile et/ou l'entité informatique à mettre en œuvre le procédé selon l'une quelconque des revendications 1 à 4.

## Fig. 1

**Fig. 2**

400[i, j]

**Fig. 3**

400[i, j]

# Fig. 4

$400_{i-1}$

101

$400_i$

$501_i$

# Fig. 5

S10 — Conversion of RGB to YUV (YCbCr, LAB, etc.) in all images

S11 — Detection and segmentation of overlapped area in the luminance domain between image $400_{i-1}$ and image $400_i$

S12 — Calculate the distance of luminance data in the overlapped area from image $400_{i-1}$ and image $400_i$

S13 — Adjustment of luminance data by applying the luminance distance data in each image $400_i$

S14 — Conversion of YUV (YCbCr, LAB, etc.) back to RGB in all images

Iterate for all images, $0 \leq i < M$

## Fig. 6A

400[i-1, j-1]

400 [i-1, j]

101

502[i,j]

400 [i, j]

400 [i, j-1]

## Fig. 6B

S20 — Conversion of RGB to YUV (YCbCr, LAB, etc.) in all images

S21 — Detection and segmentation of overlapped area in the luminance domain between image 400 [i-1, j-1], image 400[i-1, j], image 400[i, j-1], and image 400 [i, j]

S22 — Calculate the distance of luminance data in the overlapped area of image 400 [i-1, j-1], image 400[i-1, j], image 400[i, j-1], and image 400 [i, j]

S23 — Adjustment of luminance data be applying the luminance distance data in each image 400 [i, j]

S24 — Conversion of YUV (YCbCr, LAB, etc.) back to RGB in all images

Iterate for all images, $0 \leq i < M, 0 \leq j < N$

## Fig. 7A

$301_i$

$100$

$20$

$300_{i+1}$

$300_i$

$200$

## Fig. 7B

$401_i$

$400_i$

$400_{i+1}$

$20$

**Fig. 8A**

300[i+1,0]

300[i,0]

<u>100</u>

21

22

200

**Fig. 8B**

400[i+1,0]

400[i,0]

400[i,1]

**Fig. 9A**

300[i,j]

26

25

300[i,j+1]

27

100

300n

28

200

**Fig. 9B**

400[i, j]

400[i,j+1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114972025 A